# FASCICULE DE BREVET EUROPEEN

(11) **EP 2 561 280 B1**
(45) Date de publication et mention de la délivrance du brevet: **27.05.2015**
(21) Numéro de dépôt: 11718439.0
(22) Date de dépôt: 31.03.2011
(51) Int. Cl.: F24D 3/18, F24J 3/08, F24D 11/02

(54) **INSTALLATION GEOTHERMIQUE AVEC RECHARGE THERMIQUE DU SOUS SOL.**
GEOTHERMALE EINRICHTUNG MIT THERMALER REGENERIERUNG DES UNTERGRUNDS
GEOTHERMAL FACILITY WITH THERMAL RECHARGING OF THE SUBSOIL

(30) Priorité: 20.04.2010 FR 1053008
(43) Date de publication de la demande: 27.02.2013
(73) Titulaire: BSR Technologies, 92000 Nanterre (FR)
(72) Inventeur: SAUNIER, Bernard, F-78420 Carrières Sur Seine (FR); GENET, Romain, F-92100 Boulogne-Billancourt (FR); BERDUGO, Raphaël, F-94430 Chennevières-sur-Marne (FR)
(74) Mandataire: Mazabraud, Xavier
(86) Numéro de dépôt international: PCT/FR2011/050719
(87) Numéro de publication internationale: WO 2011/131885

(56) Documents cités:
- WO-A1-2008/113604
- DE-A1- 2 930 484
- DE-A1-102007 055 652
- DE-A1-102007 062 402
- DE-A1-102009 010 687
- DE-U1-202006 005 592

## Description

La présente demande concerne une installation de transfert calorifique utilisant une pompe à chaleur, une source d'énergie calorifique de nature géothermique et au moins une canalisation d'eau. Elle s'applique notamment, mais non exclusivement, au chauffage et/ou à la climatisation de locaux.

La géothermie consiste à extraire l'énergie calorifique contenue dans le sol pour la production de chaleur ou d'électricité. Il est communément admis de classer la géothermie en trois catégories : la haute énergie (T > 100° C), la basse énergie (30° C< T < 100° C) et la très basse énergie (T < 30° C).

Les sites géothermiques à haute énergie permettent la production d'électricité. Les sites géothermiques de basse (utilisation directe des nappes d'eau chaude du sous-sol profond) et très basse énergie (utilisation via des pompes à chaleur) sont utilisés pour produire de la chaleur.

Pour la géothermie très basse énergie, une solution pour récupérer la chaleur du sous-sol est l'utilisation de sondes géothermiques, par exemple verticales. Ces sondes sont installées dans un forage de plusieurs dizaines de mètres de profondeur dans lesquelles circule un fluide caloporteur en circuit fermé. La température du sol à ces profondeurs est le résultat d'un équilibre entre les échanges avec l'atmosphère, à la surface du sol, et le flux géothermique en provenance des profondeurs. A 10 m de profondeur, elle oscille autour de 10 à 12 °C, elle est donc relativement stable. Lorsqu'un système y puise des calories, l'équilibre se rétablit grâce aux échanges avec le sol environnant.

Cependant, s'il est très sollicité, le système peut puiser à long terme plus de calories que le sol ne peut en apporter, car cet équilibre est relativement long à s'établir. Il en résulte une baisse de la température du sol environnant les sondes, qui a comme conséquence une dégradation des performances des pompes à chaleur au cours du temps et une hausse des consommations électriques. Cette décharge thermique du sol peut être très importante notamment lorsqu'il y a un déséquilibre important, en moyenne annuelle, entre l'énergie extraite du sol et l'énergie réinjectée naturellement dans le sol autour des sondes. La recharge naturelle du sol par le flux géothermique ne permet pas de retrouver un niveau de température équivalent au niveau initial.

Une solution consiste à recourir à d'autres sources de chaleur pour « recharger » le sol en calories. La demande FR 2 922 634 propose un système qui utilise des capteurs solaires pour « recharger » le sol en calories. Cependant ce procédé comporte des inconvénients car les capteurs solaires ne sont pas une source de calories stable, leur température dépendant essentiellement de l'ensoleillement. De plus, dans le cas d'un système réversible, c'est à dire utilisable également pour produire du froid pour rafraîchir des locaux, notamment en été, le système va « recharger » le sous-sol en calories alors que l'on veut l'utiliser comme source froide.

L'invention a donc plus particulièrement pour but de supprimer cet inconvénient. A cet effet l'invention propose une installation de transfert d' énergie calorifique selon la revendication 1 et un procédé de recharge thermique d'un sol selon la revendication 10.

L'invention porte sur une installation de transfert d'énergie calorifique d'origine géothermique, par exemple en vue de contribuer au chauffage de locaux, cette installation ayant la particularité de comporter un échangeur thermique disposé sur une canalisation d'eau. Le principe de l'installation est de puiser les calories contenues dans le sol pour les transférer vers les besoins (logements, bureaux, process industriels, équipements divers,...), et de recharger le sol en calories puisées dans un liquide utilisé en service public, eaux usées, eau potable, et/ou utilisé dans l'industrie.

Avantageusement, la canalisation de réseau d'eau peut être une canalisation de réseau d'eaux usées, d'eau industrielle ou une canalisation d'adduction d'eau.

Ladite canalisation de réseau d'eau peut provenir d'un réseau de refroidissement d'un procédé industriel, nécessitant le recours à un circuit de refroidissement.

Diverses techniques d'échangeurs permettent de prélever des calories sur des canalisations d'eau (les demandes WO 2008/113604 A1 et DE 2930484 A1 montrent des échangeurs thermiques disposés auprès de canalisations d'eau), notamment d'eaux usées. Ces dernières restent chaudes pendant les périodes de froid climatique, elles peuvent ainsi servir de source de chaleur pour les pompes à chaleur. Divers autres liquides restent chauds pendant l'hiver : eau potable, eaux industrielles, circulant en tuyaux fermés, enterrés ou non, peuvent aussi être utilisés comme source chaude.

L'avantage de ce type de source de calories est qu'elle est beaucoup plus stable dans le temps que des capteurs solaires. La température des eaux usées par exemple varie entre 13 à 17° C en hiver, et 20 à 25° C en été. Cette source de calories peut être qualifiée de renouvelable car les calories des eaux usées sont un sous-produit de l'activité humaine qui est autrement perdu. Grâce à sa relative permanence dans le temps, elle est tout indiquée pour constituer un apport calorique de « base » pour un système de chauffage de locaux. Le gain estimé est d'environ 30% par rapport à un système utilisant l'énergie géothermique seule.

Avantageusement, l'installation comporte un premier mode de fonctionnement dans lequel ledit circuit de fluide caloporteur est un circuit en boucle fermée disposé de sorte que le fluide caloporteur circule dans l'évaporateur de ladite pompe à chaleur, puis dans le second échangeur thermique, puis dans le premier échangeur thermique.

Dans cette configuration, le fluide caloporteur cède des calories lors de son passage dans l'évaporateur de la pompe à chaleur, puis se réchauffe en passant dans l'échangeur associé à la canalisation d'eaux, puis est dirigé vers l'échangeur géothermique avant de retourner vers l'évaporateur. De cette façon, le fluide se recharge en calories provenant des eaux, par exemple des eaux usées, avant d'aller puiser des calories dans le sol avec l'échangeur géothermique. Typiquement, le fluide peut ainsi passer, en sortie de l'évaporateur, d'une température d'environ 1° C à environ 3° C en hiver, ou d'environ 7° C à environ 12° C en été. Ce réchauffement du fluide caloporteur diminue le prélèvement de calories exercé sur le sous-sol et améliore le rendement de l'installation.

L'installation comporte un second mode de fonctionnement dans lequel ledit circuit de fluide caloporteur est un circuit en boucle fermée disposé de telle sorte que le fluide caloporteur circule dans le premier échangeur thermique puis dans le second échangeur thermique.

Dans cette configuration, le fluide caloporteur ne passe plus par l'évaporateur de la pompe à chaleur, mais circule entre le second échangeur couplé à la canalisation d'eaux, et le premier échangeur dans le sol. De cette façon l'installation recharge le sol en calories. Il s'agit principalement d'un mode de fonctionnement estival, lorsque le besoin de chauffage est faible ou nul et la température des eaux, par exemple des eaux usées, est relativement élevée.

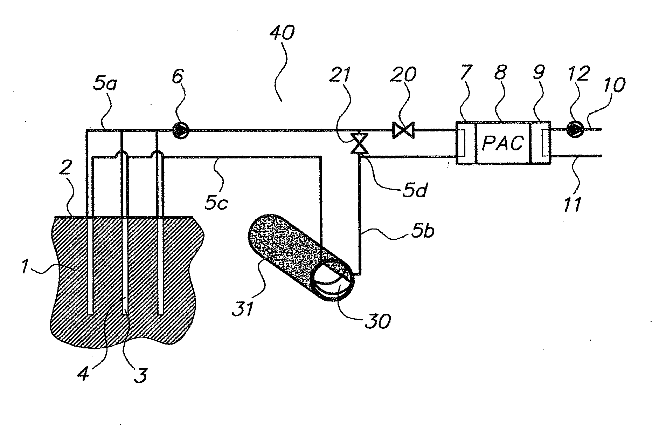

L'invention sera mieux comprise à la lecture de la description ci-après, se référant aux dessins annexés dans lesquels :
La figure unique est une représentation schématique d'une installation de transfert calorifique utilisant des sondes géothermiques et une canalisation d'eau.

La géothermie très basse énergie est usuellement exploitée pour la production de chaleur et de froid. Cette production s'effectue habituellement à l'aide d'une pompe à chaleur 8 qui échange avec le sol 1 une énergie thermique par l'intermédiaire d'une ou plusieurs sondes géothermiques 3 par exemple verticales.

On sait qu'une pompe à chaleur 8 est une machine thermodynamique apte à puiser de la chaleur dans un milieu appelé « source froide » dont la température est inférieure à celle du besoin. Elle transfère ensuite cette énergie à un fluide caloporteur, en général l'eau chaude mais aussi quelquefois l'air.

L'énergie calorifique est prélevée à basse température au niveau de l'échangeur de l'évaporateur 7 de la pompe à chaleur 8. La chaleur est ensuite transmise à plus haute température à la « source chaude » au niveau de l'échangeur du condenseur 9 de la pompe à chaleur.

Dans l'exemple illustré, les sondes géothermiques verticales 3 comprennent chacune un premier échangeur 4 placé dans un forage vertical réalisé dans le sol 1 à partir de la surface 2 du sol. Ce forage peut atteindre plusieurs dizaines de mètres de profondeur. Cet échangeur 4 peut ensuite être scellé dans le forage par un coulis (ciment + bentonite par exemple). On connaît plusieurs types de sondes géothermiques verticales : par exemple « en U », « en double U » ou encore « coaxiales ».

Dans l'exemple illustré, la pompe à chaleur 8 a été représentée schématiquement par un bloc rectangulaire comportant, d'un côté, un sous-ensemble incluant l'échangeur de l'évaporateur 7 et, de l'autre côté, un sous-ensemble incluant l'échangeur du condenseur 9.

Un fluide caloporteur (généralement de l'eau additionnée d'antigel) circule dans un circuit en boucle fermée 40 au moyen d'une pompe de circulation 6, le circuit 40 comprenant :
- des premiers échangeurs thermiques 4 couplés à une pluralité de sondes géothermiques 3,
- un second échangeur thermique 30 couplé à une canalisation d'eaux usées 31,
- l'évaporateur 7 de la pompe à chaleur 8,
- un premier tuyau 5a, reliant la sortie des premiers échangeurs 4 et l'entrée de l'évaporateur 7, un deuxième tuyau 5b reliant la sortie de l'évaporateur 7 et l'entrée du second échangeur 30, et un troisième tuyau 5c reliant la sortie du second échangeur 30 couplé à la canalisation 31 et l'entrée des premiers échangeurs 4 couplés aux sondes géothermiques 3 ; un quatrième tuyau 5d relie le premier tuyau 5a au deuxième tuyau 5b, permettant de « by passer » la pompe à chaleur 8. La pompe de circulation 6 est montée sur le premier tuyau 5a, mais elle pourrait être montée sur le deuxième ou le troisième tuyau, l'important étant qu'elle puisse entraîner le fluide caloporteur dans les deux modes de fonctionnement de l'installation, c'est à dire qu'elle soit montée sur une partie commune aux circuits mis en oeuvre dans ces modes de fonctionnement.

Dans un premier mode de fonctionnement en mode chauffage, la vanne 20 située sur le premier tuyau 5a est ouverte, la vanne 21 située sur le quatrième tuyau 5d est fermée. Dans ce premier mode de fonctionnement, le fluide caloporteur circule en boucle fermée entre les premiers échangeurs 4, l'évaporateur 7 de la pompe à chaleur 8 et le second échangeur 30.

Le fluide puise des calories dans le sol 1 grâce aux premiers échangeurs 4, circule dans le premier tuyau 5a vers l'évaporateur 7 de la pompe à chaleur 8, cède ces calories dans l'échangeur de l'évaporateur 7, emprunte le deuxième tuyau 5b vers le second échangeur 30 où il se réchauffe, circule ensuite dans le troisième tuyau 5c pour retourner dans les premiers échangeurs 4 des sondes géothermiques 3.

Le fluide échange de la chaleur avec le sol 1 qui entoure les sondes géothermiques 3, avec la canalisation d'eau 31 et avec le fluide frigorigène de la pompe à chaleur 8.

Si la température du fluide caloporteur circulant dans la/les sonde(s) géothermique(s) 3 est inférieure à la température du sol 1 en contact avec la/les sonde(s) 3, le fluide caloporteur se réchauffe en prélevant de la chaleur au sol 1 autour des sondes géothermiques 3 et ainsi, refroidit le sol 1 autour de ces sondes géothermiques 3.

Dans ce cas, l'installation prélève des calories au sol 1, la pompe à chaleur 8 prélève ces calories au fluide caloporteur au niveau de son évaporateur 7, par exemple en vue du chauffage d'un bâtiment et/ou préchauffage de l'eau chaude sanitaire. De façon à minimiser le refroidissement du sol 1, le fluide caloporteur emprunte le second échangeur 30 couplé à la canalisation d'eaux usées 31 de façon à se réchauffer avant d'être dirigé vers les sondes géothermiques 3.

On limite ainsi la décharge thermique du sol 1 et donc la baisse de la température du fluide caloporteur circulant dans les sondes géothermiques 3.

La chaleur prélevée par la pompe à chaleur 8 est ensuite fournie à la source chaude grâce à l'échangeur du condenseur 9. Cette chaleur est récupérée par le fluide de la source chaude qui circule dans les tubes 10 et 11 au moyen d'une pompe 12.

En dehors de la saison de chauffe, c'est-à-dire la période de l'année où il n'y a pas de besoin de chaleur, qui correspond à la période estivale, l'installation couplant les sondes géothermiques 3 à une canalisation d'eaux usées 31 fonctionne en mode injection de chaleur dans le sol 1.

La mise de l'installation dans ce mode de fonctionnement pourra se faire, par exemple, en fonction de la température extérieure (mise en fonctionnement si la température extérieure est supérieure à une température extérieure de consigne).

Lorsque ce second mode de fonctionnement est activé, la vanne 20 montée sur le premier tuyau 5a est fermée et la deuxième vanne 21 montée sur le quatrième tuyau 5d est ouverte, c'est à dire que la pompe à chaleur 8 est « by passée ».

Dans ce second mode de fonctionnement, le fluide caloporteur circule en boucle fermée entre les premiers échangeurs 4 des sondes géothermiques 3 et le second échangeur 30 associé à la canalisation 31 grâce à la pompe 6 montée sur le premier tuyau 5a. Le fluide se réchauffe en traversant le second échangeur 30, circule ensuite dans le troisième tuyau 5c, puis dans les premiers échangeurs 4 des sondes géothermiques 3 et retourne au second échangeur 30 par les tuyaux 5d et 5b. Comme la température du fluide caloporteur est supérieure à la température du sol 1 entourant les sondes géothermiques verticales 3, puisqu'il a été réchauffé par le second échangeur 30, le fluide caloporteur cède de la chaleur au sol 1 entourant les sondes géothermiques 3.

Ce mode de fonctionnement permet ainsi une recharge thermique du sol 1 entourant les sondes géothermiques 3 grâce à l'énergie thermique fournie par la canalisation d'eaux usées 31. Cette recharge thermique permet de compenser au moins partiellement la décharge thermique du sol 1 engendrée par le prélèvement de chaleur du sol 1 par la pompe à chaleur 8 au moyen des sondes géothermiques 3 pendant la saison de chauffe.

## Revendications

1. Installation de transfert d'énergie calorifique comprenant :
- au moins une sonde géothermique (3) comprenant au moins un premier échangeur thermique (4) disposé auprès d'une source d'énergie géothermique (1),
- au moins un second échangeur thermique (30) disposé auprès d'une source d'énergie thermique renouvelable comportant une canalisation de réseau d'eau,
- une pompe à chaleur (8),
- un circuit de fluide caloporteur (40) reliant l'évaporateur (7) de ladite pompe à chaleur auxdits premier et second échangeur thermique,
**caractérisée en ce que** qu'elle comporte un mode de fonctionnement dans lequel ledit circuit de fluide caloporteur (40) est un circuit en boucle fermée disposé de telle sorte que le fluide caloporteur circule dans l'au moins un premier échangeur thermique (4) puis dans l'au moins un second échangeur thermique (30), mais ne passe plus par l'évaporateur de la pompe à chaleur, de façon à recharger le sol en calories.

2. Installation de transfert d'énergie calorifique selon la revendication 1, **caractérisé en ce que** ledit circuit de fluide caloporteur (40) comporte :
- lesdits premiers échangeurs thermiques (4),
- ledit second échangeur thermique (30),
- ledit évaporateur (7),
- un premier tuyau (5a), reliant la sortie des premiers échangeurs (4) et l'entrée de l'évaporateur (7), un deuxième tuyau (5b) reliant la sortie de l'évaporateur (7) et l'entrée du second échangeur (30), un troisième tuyau (5c) reliant la sortie du second échangeur (30) couplé à la canalisation (31) et l'entrée des premiers échangeurs (4), et un quatrième tuyau (5d) qui relie le premier tuyau (5a) au deuxième tuyau (5b).

3. Installation de transfert d'énergie calorifique selon la revendication 2, **caractérisée en ce qu'**une première vanne (20) est située sur ledit premier tuyau (5a), et **en ce qu'**une seconde vanne (21) est située sur ledit quatrième tuyau (5d).

4. Installation de transfert d'énergie calorifique selon l'une des revendications précédentes,
**caractérisé en ce que** chaque premier échangeur thermique (4) est situé au sein d'une sonde géothermique (3).

5. Installation de transfert d'énergie calorifique selon l'une des revendications 1 à 4,
**caractérisée en ce que** ladite canalisation de réseau d'eau est une canalisation de réseau d'eaux usées (31).

6. Installation de transfert d'énergie calorifique selon l'une des revendications 1 à 4,
**caractérisée en ce que** ladite canalisation de réseau d'eau est une canalisation de réseau d'adduction d'eau.

7. Installation de transfert d'énergie calorifique selon l'une des revendications 1 à 4,
**caractérisée en ce que** ladite canalisation de réseau d'eau est une canalisation d'eau industrielle.

8. Installation de transfert d'énergie calorifique selon la revendication 7, **caractérisée en ce que** ladite canalisation de réseau d'eau provient d'un réseau de refroidissement d'un procédé industriel, nécessitant le recours à un circuit de refroidissement.

9. Installation de transfert d'énergie calorifique selon l'une des revendications 1 à 8,
**caractérisée en ce qu'**elle comporte un autre mode de fonctionnement dans lequel ledit circuit de fluide caloporteur (40) est un circuit en boucle fermée disposé de sorte que le fluide caloporteur circule dans l'évaporateur (7) de ladite pompe à chaleur (8), puis dans l'au moins un second échangeur thermique (30), puis dans l'au moins un premier échangeur thermique (4).

10. Procédé de recharge thermique d'un sol au moyen d'une installation de transfert d'énérgie calorifique selon l'une des revendications 1 à 9, comportant l'étape consistant à :
- faire circuler un fluide caloporteur dans un circuit en boucle fermée, entre d'une part un premier échangeur thermique (4) couplé à au moins une sonde géothermique (3), disposé auprès d'une source d'énergie géothermique (1), et d'autre part au moins un second échangeur thermique (30) couplé à une source d'énergie thermique renouvelable comportant une canalisation de réseau d'eau enterrée, et ne plus faire passer le fluide caloporteur par l'évaporateur (7) d'une pompe à chaleur (8).

## Patentansprüche

1. Einrichtung zur Übertragung von Wärmeenergie umfassend:
- mindestens eine Erdwärmesonde (3), umfassend mindestens einen ersten in der Nähe einer geothermischen Energiequelle (1) angeordneten Wärmetauscher (4),
- mindestens einen zweiten Wärmetauscher (30), angeordnet in der Nähe einer Quelle für erneuerbare thermische Energie, die eine Wassernetzkanalisation umfasst,
- eine Wärmepumpe (8),
- einen Wärmeträgerflüssigkeitskreislauf (40), der den Verdampfer (7) der Wärmepumpe mit dem ersten und zweiten Wärmetauscher verbindet,
**dadurch gekennzeichnet,**
**dass** sie einen Betriebsmodus aufweist, bei dem der Wärmeträgerflüssigkeitskreislauf (40) ein geschlossener Kreislauf ist, der derart angeordnet ist, dass die Wärmeträgerflüssigkeit durch den mindestens einen ersten Wärmetauscher (4) und anschließend durch den mindestens einen zweiten Wärmetauscher (30) fließt, aber nicht mehr durch den Verdampfer der Wärmepumpe fließt, um den Boden mit Kalorien wieder aufzuladen.

2. Einrichtung zur Übertragung von Wärmeenergie nach Anspruch 1, **dadurch gekennzeichnet, dass** der Wärmeträgerflüssigkeitskreislauf (40) umfasst:
- die ersten Wärmetauscher (4),
- den zweiten Wärmetauscher (30),
- den Verdampfer (7)
- ein erstes Rohr (5a), das den Auslass der ersten Wärmetauscher (4) und den Einlass des Verdampfers (7) verbindet, ein zweites Rohr (5b), das den Auslass des Verdampfers (7) und den Einlass des zweiten Wärmetauschers (30) verbindet, ein drittes Rohr (5c), das den Auslass des mit der Kanalisation (31) verkoppelten zweiten Wärmetauschers (30) und den Einlass der ersten Wärmetauscher (4) verbindet, und ein viertes Rohr (5d), das das erste Rohr (5a) mit dem zweiten Rohr (5b) verbindet.

3. Einrichtung zur Übertragung von Wärmeenergie nach Anspruch 2,
**dadurch gekennzeichnet, dass** ein erstes Ventil (20) an dem ersten Rohr (5a) angeordnet ist, und dass ein zweites Ventil (21) an dem vierten Rohr (5d) angeordnet ist.

4. Einrichtung zur Übertragung von Wärmeenergie nach Anspruch 2, **dadurch gekennzeichnet, dass** jeder erste Wärmetauscher (4) innerhalb einer Erdwärmesonde (3) angeordnet ist.

5. Einrichtung zur Übertragung von Wärmeenergie nach einem der Ansprüche 1 bis 4, **dadurch gekennzeichnet, dass** die Wassernetzkanalisation eine Kanalisation eines Abwassernetzes (31) ist.

6. Einrichtung zur Übertragung von Wärmeenergie nach einem der Ansprüche 1 bis 4, **dadurch gekennzeichnet, dass** die Wassernetzkanalisation eine Kanalisation eines Wasserversorgungsnetzes ist.

7. Einrichtung zur Übertragung von Wärmeenergie nach einem der Ansprüche 1 bis 4, **dadurch gekennzeichnet, dass** die Wassernetzkanalisation eine Betriebswasserkanalisation ist.

8. Einrichtung zur Übertragung von Wärmeenergie nach Anspruch 7, **dadurch gekennzeichnet, dass** die Wassernetzkanalisation von einem Kühlwassernetz für ein industrielles Verfahren herkommt, welches einen Kühlkreis benötigt.

9. Einrichtung zur Übertragung von Wärmeenergie nach einem der Ansprüche 1 bis 8, **dadurch gekennzeichnet, dass** sie einen anderen Betriebsmodus aufweist, bei dem der Wärmeträgerflüssigkeitskreislauf (40) ein geschlossener Kreislauf ist, der derart angeordnet ist, dass die Wärmeträgerflüssigkeit durch den Verdampfer (7) der Wärmepumpe (8), danach durch den mindestens einen zweiten Wärmetauscher (30) und dann durch den mindestens einen ersten Wärmetauscher (4) fließt.

10. Verfahren zur thermischen Wiederaufladung eines Bodens mittels einer Einrichtung zur Übertragung von Wärmeenergie nach einem der Ansprüche 1 bis 9, umfassend einen Schritt, indem man eine Wärmeträgerflüssigkeit durch einen geschlossenen Kreis, zwischen einem ersten mit mindestens einer Erdwärmesonde (3) verkoppelten und in der Nähe einer geothermischen Quelle (1) angeordneten Wärmetauscher (4) einerseits und mindestens einem zweiten mit einer Quelle für erneuerbare thermische Energie verkoppelten und eine eingegrabene Wassernetzkanalisation umfassenden Wärmetauscher (30) andererseits, zirkulieren lässt und die Wärmeträgerflüssigkeit nicht mehr durch den Verdampfer (7) einer Wärmepumpe (8) geführt wird.

## Claims

1. Installation for transferring heat energy comprising:
- at least one geothermal probe (3) comprising at least one first heat exchanger (4) arranged near a geothermal energy source (1),
- at least one second heat exchanger (30) arranged near source of renewable thermal energy comprising a water network line,
- a heat pump (8),
- a heat transfer medium circuit (40) connecting the evaporator (7) of said heat pump to said first and second heat exchanger,
**characterised in that** it comprises an operating mode wherein said heat transfer medium circuit (40) is a closed loop circuit arranged in such a way that the heat transfer medium circulates in at least one first heat exchanger (4) then in at least one second heat exchanger (30), but no longer passes through the evaporator of the heat pump, in such a way as to recharge the ground with calories.

2. Installation for transferring heat energy according to claim 1, **characterised in that** said heat transfer medium circuit (40) comprises:
- said first heat exchangers (4),
- said second heat exchanger (30),
- said evaporator (7),
- a first pipe (5a), connecting the outlet of the first exchangers (4) and the inlet of the evaporator (7), a second pipe (5b) connecting the outlet of the evaporator (7) and the inlet of the second exchanger (30), a third pipe (5c) connecting the outlet of the second exchanger (30) coupled to the line (31) and the inlet of the first exchangers (4), and a fourth pipe (5d) that connects the first pipe (5a) to the second pipe (5b).

3. Installation for transferring heat energy according to claim 2, **characterised in that** a first valve (20) is located on said first pipe (5a), and **in that** a second valve (21) is located on said fourth pipe (5d).

4. Installation for transferring heat energy according to one of the preceding claims,
**characterised in that** each first heat exchanger (4) is located within a geothermal probe (3).

5. Installation for transferring heat energy according to one of claims 1 to 4,
**characterised in that** said water network line is a wastewater network line (31).

6. Installation for transferring heat energy according to one of claims 1 to 4,
**characterised in that** said water network line is a water supply network line.

7. Installation for transferring heat energy according to one of claims 1 to 4,
**characterised in that** said water network line is an industrial water line.

8. Installation for transferring heat energy according to claim 7, **characterised in that** said water network line comes from a cooling network of an industrial method, that requires recourse to a cooling circuit.

9. Installation for transferring heat energy according to one of claims 1 to 8,
**characterised in that** it comprises an other operating mode wherein said heat transfer medium circuit (40) is a closed loop circuit arranged in such a way that the heat transfer medium circulates in the evaporator (7) of said heat pump (8), then in at least one second heat exchanger (30), then in at least one first heat exchanger (4).

10. Method for the thermal recharging of a ground by means of an installation for transferring heat energy according to one of claims 1 to 9, comprising the step consisting in:
- circulating a heat transfer medium in a closed loop circuit, between on the one hand a first heat exchanger (4) coupled to at least one geothermal probe (3), arranged near a geothermal energy source (1), and on the other hand at least one second heat exchanger (30) coupled to a renewable source of thermal energy comprising a buried water network line, and no longer having the heat transfer medium pass through the evaporator (7) of a heat pump (8).
